# EUROPÄISCHE PATENTSCHRIFT

(11) **EP 1 514 368 B1**
(45) Veröffentlichungstag und Bekanntmachung des Hinweises auf die Patenterteilung: **20.07.2005**
(21) Anmeldenummer: 03727416.4
(22) Anmeldetag: 30.04.2003
(51) Int. Cl.: H04B 17/00

(54) **SIGNALANALYSATOR UND VERFAHREN ZUM ANZEIGEN VON LEISTUNGEN VON CODE-KANÄLEN BEI ORTHOGONALER SENDEDIVERSITÄT**
SIGNAL ANALYSER AND METHOD FOR DISPLAYING POWERS OF CODE CHANNELS WITH ORTHOGONAL TRANSMIT DIVERSITY
ANALYSEUR DE SIGNAUX ET PROCEDE POUR AFFICHER DES PUISSANCES DE CANAUX CODE AVEC DIVERSITE A L'EMISSION ORTHOGONALE

(30) Priorität: 14.06.2002 DE 10226639
(43) Veröffentlichungstag der Anmeldung: 16.03.2005
(73) Patentinhaber: Rohde & Schwarz GmbH & Co. KG, 81671 München (DE)
(72) Erfinder: HELLER, Klaus, 82131 Gauting (DE)
(74) Vertreter: Körfer, Thomas, Dipl.-Phys.
(86) Internationale Anmeldenummer: PCT/EP2003/004567
(87) Internationale Veröffentlichungsnummer: WO 2003/107567

(56) Entgegenhaltungen:
- US-B1- 6 173 005
- US-B1- 6 219 340
- WANG K ET AL: "NEW DIFFERENTIAL TRANSMISSION SCHEME WITH TRANSMIT DIVERSITY FOR DS-CDMA SYSTEMS" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, Bd. 1 OF 4. CONF. 54, 7. Oktober 2001 (2001-10-07), Seiten 232-236, XP001113784 ISBN: 0-7803-7005-8

## Beschreibung

Die Erfindung betrifft einen Signalanalysator sowie ein Verfahren zum Anzeigen von Leistungen von Code-Kanälen eines CDMA (Code Division Multiple Access)-Signals.

Zur Überprüfung von Komponenten für Mobilfunksysteme der dritten Generation ist es erforderlich, Leistungen einzelner Code-Kanäle, aus denen sich das Gesamtsignal zusammensetzt, zu ermitteln. Zur Durchführung einer Auswertung der gemessenen Leistungen der einzelnen Code-Kanäle werden die jeweiligen Leistungen der Code-Kanäle graphisch dargestellt.

Hierzu ist aus der US 6,219,340 B1 bekannt, die einzelnen Leistungen der Code-Kanäle in Form eines Balkens darzustellen. In Richtung der X-Achse werden die einzelnen Code-Kanäle so aufgetragen, daß die jeweils zu einer Codeklasse gehörenden Code-Kanäle nebeneinanderliegend angeordnet sind. Die Länge der für jeden Code-Kanal dargestellten Balken in Y-Richtung gibt dabei die gemessene Leistung des jeweiligen Code-Kanals an. Die Zugehörigkeit der einzelnen Code-Kanäle zu einer Codeklasse, also zu einem bestimmten Spreizfaktor (Spreading Factor, SF), wird in der vorgeschlagenen Darstellung dadurch erreicht, daß entsprechend dem niedrigeren Spreizfaktor der niedrigeren Codeklasse die Darstellung der zugeordneten Balken für den jeweils entsprechenden Code-Kanal der niedrigeren Codeklasse breiter ist.

Bei der Auswertung von Signalen mit orthogonaler Transmit Diversity ergibt sich das Problem, daß die Leistungen der einzelnen Code-Kanäle und deren Verteilung auf die verwendeten Antennen damit nicht erkennbar sind. Insbesondere ist nicht vorgesehen, diejenigen Code-Kanäle, welche zu einer aktiven Antenne eines tatsächlich aktiven Code-Kanals gehören, geschlossen darzustellen.

Daraus ergibt sich der Nachteil, daß für eine Antenne bei orthogonalem Transmit Diversity (Sendung über mehrere Antennen mit für die Antennen orthogonalem Code) nur ein Teil der tatsächlich für einen aktiven Code-Kanal relevanten Leistungen von Code-Kanälen dargestellt wird.

Es ist Aufgabe der Erfindung einen Signalanalysator sowie ein Verfahren zum Anzeigen von Leistungen von Code-Kanälen zu schaffen, bei dem für CDMA-Signale mit Transmit Diversity die darzustellenden Leistungen der Code-Kanäle für jeweils eine Antenne vollständig dargestellt werden.

Die Aufgabe wird durch das Verfahren nach Anspruch 1 und den Signalanalysator nach Anspruch 3 gelöst.

Bei orthogonaler Transmit Diversity wird das Signal eines aktiven Code-Kanals auf zumindest zwei Antennen verteilt. Hierzu werden zwei orthogonale Codes erzeugt, die der nächsthöheren Codeklasse zu entnehmen sind. Die niedrigere Code-Kanal-Nummer wird dann Antenne 1 zugeordnet, die höhere Code-Kanal-Nummer Antenne 2.

Aufgrund der Erzeugung der einzelnen Codes der Code-Kanäle für die jeweiligen Codeklassen und der Vorschrift für Transmit Diversity, daß die jeweils unteren Code-Kanäle, also diejenigen Code-Kanäle mit den niedrigen Code-Kanal-Nummern, einer ersten Antenne bzw. die oberen Code-Kanäle einer zweiten Antenne zuzuordnen sind, wenn ein Signal mit Transmit Diversity gesendet wird, ist bei der Darstellung eines aktiven Code-Kanals in einer höheren Codeklasse nur jeder zweite gemessene Code-Kanal dem Code-Ast der tatsächlich aktiven Antenne zugeordnet. Diese irreführende Zuordnung wird durch das erfindungsgemäße Verfahren bzw. in einer Auswerteeinrichtung des erfindungsgemäßen Signalanalysators entsprechend der Entstehung der Code-Kanäle aus der Hadamard-Matrix korrigiert. Damit sind in der korrigierten Darstellung die Leistungen aller jeweils zu einer tatsächlich aktiven Antenne gehörenden Code-Kanäle angezeigt.

Die Unteransprüche betreffen vorteilhafte Weiterbildungen des erfindungsgemäßen Verfahrens sowie des erfindungsgemäßen Signalanalysators.

Die Erfindung ist in der Zeichnung dargestellt und wird anhand der nachfolgenden Beschreibung anhand von Ausführungsbeispielen näher erläutert. Es zeigen:
- Fig. 1: eine schematische Darstellung eines Ausschnitts eines Code-Baums;
- Fig. 2: eine Übersicht über die Zuordnung für das Beispiel aus Fig. 1;
- Fig. 3: ein Blockschaltbild eines beispielhaften Meßaufbaus mit dem erfindungsgemäßen Signalanalysator;
- Fig. 4: eine weitere schematische Darstellung eines Ausschnitts eines Code-Baumes;
- Fig. 5A-C: drei weitere schematische Darstellungen von Ausschnitten eines Code-Baumes;
- Fig. 6: eine graphische Darstellung der Anzeigevorrichtung vor Durchführen der Code-Kanal-Vertauschung; und
- Fig. 7: eine graphische Darstellung der Leistungen der Code-Kanäle nach Durchführen der Code-Kanal-Vertauschung.

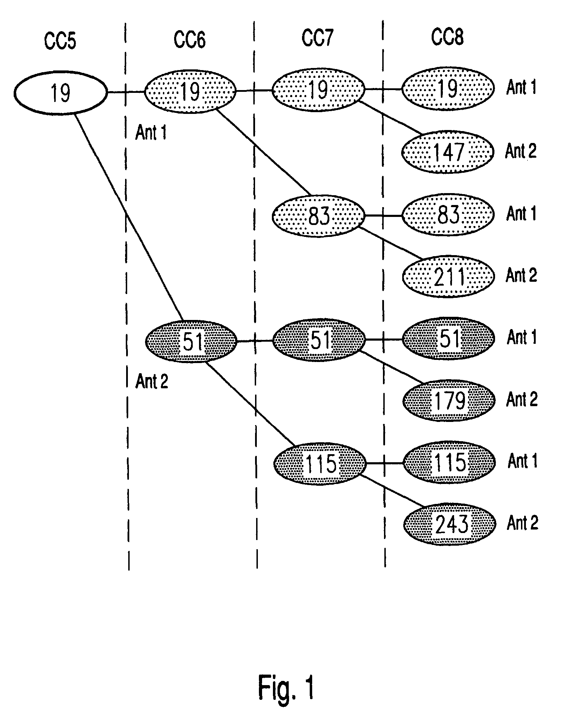

In Fig. 1 ist ein Ausschnitt eines Code-Baums schematisch dargestellt. In horizontaler Richtung sind die einzelnen Code-Klassen aufgetragen, welche mit den Bezeichnungen CC5 für Codeklasse 5, CC6 für Codeklasse 6, usw. bezeichnet sind. Im dargestellten Beispiel soll der Code-Kanal mit der Nummer 19 der Codeklasse CC5 aktiv sein. Bei Senden des Signals mit orthogonaler Transmit Diversity wird der dem Code-Kanal 19 der Codeklasse CC5 zugeordnete Code zur Verteilung auf die beiden Antennen Ant1 und Ant2 um einen zusätzlichen Faktor gespreizt. Der tatsächlich in Codeklasse CC5 aktive Kanal 19 wird daher in der Codeklasse CC6 als Code-Kanal 19 auf Antenne Ant1 und als Code-Kanal 51 auf Antenne Ant2 gesendet.

Das Bildungsgesetz der Code-Kanal-Nummern ist wie folgt: Die Code-Kanal-Nummer für Antenne Ant1 ist die Basis-Codekanal-Nummer. Die Code-Kanal-Nummer für Antenne Ant2 ist die Basis-Codekanal-Nummer zuzüglich Basis-Spreizfaktor.

Im vorliegenden Beispiel sei angenommen, daß eine Darstellung der Leistungen der Code-Kanäle in Codeklasse CC7 erfolgen soll. Hierzu ist es zunächst erforderlich, den zusätzlichen Spreizfaktor aufgrund der orthogonalen Transmit Diversity zu berücksichtigen, indem vor der Darstellung der Codeklasse CC7 die nächst höhere Codeklasse CC8 gemessen wird. Entsprechend der Vorschrift für das Erzeugen der Codes und Zuweisen der Code-Kanäle zu den einzelnen Antennen bei der orthogonalen Transmit Diversity sind die einzelnen Code-Kanäle, wie in der Fig. 1 dargestellt, auf die Antennen Ant1 bzw. Antenne Ant2 verteilt.

Dies bedeutet, daß ein Messen der Leistungen der einzelnen Code-Kanäle in der Codeklasse CC8 ergibt, daß die Leistungen der Code-Kanäle 19, 83, 51 und 115 für die Antenne Ant1 gemessen werden, und für die Antenne Ant2 die Code-Kanäle 147, 211, 179 und 243. Diese Zuordnung ergibt sich aus der Vorschrift, daß jeweils die untere Hälfte der Kanalnummern der Antenne Ant1 zuzuordnen sind und die obere Hälfte der Kanalnummern der Antenne Ant2.

Für das gewählte Beispiel ist jedoch tatsächlich die Antenne Ant1 mit dem Code-Kanal 19 in Codeklasse CC5 aktiv, so daß der Antenne Ant1 für eine antennenrichtige Wiedergabe der gemessenen Leistungen die Code-Kanäle 19, 147, 83 sowie 211 zuzuordnen sind, wie sich dies aus der Darstellung des entsprechenden Code-Astes in Fig. 1, die einer "bitreversen Darstellung" entspricht, ergibt. Dementsprechend umfaßt eine antennenrichtige Darstellung für Antenne Ant2 die Code-Kanäle 51, 179, 115 und 243, welche sich aus dem Code-Ast ergeben, der in Codeklasse CC6 in dem Code-Kanal 51 seinen Ursprung hat.

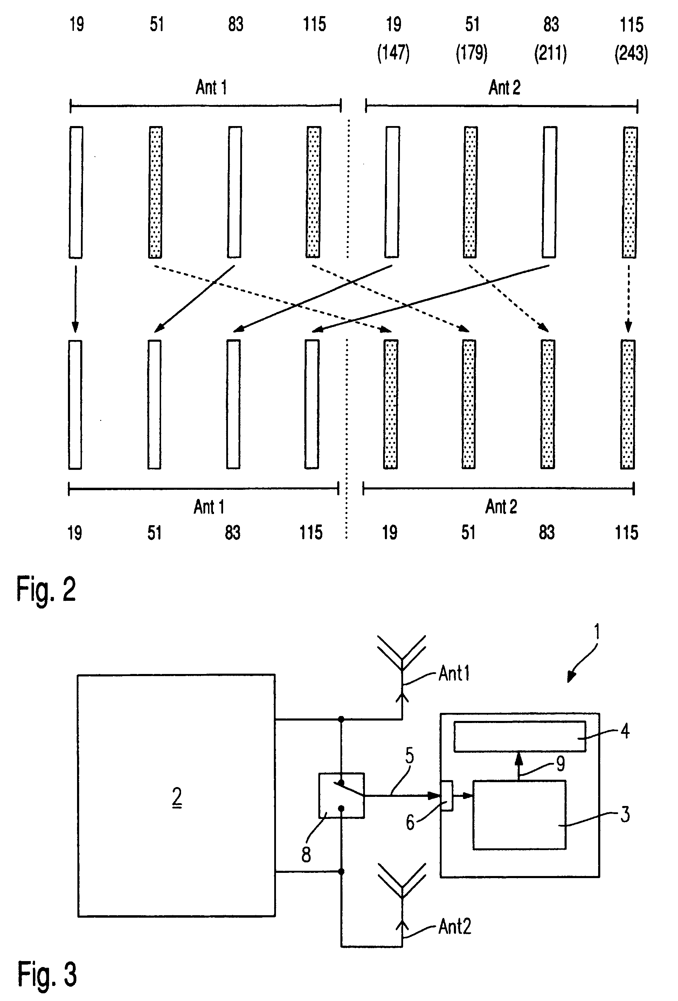

In Fig. 2 ist schematisch die Zuordnung für das gewählte Beispiel aus Fig. 1 dargestellt. In der oberen Hälfte der Fig. 2 sind die Leistungen der Codekanäle so dargestellt, wie sie sich aus der Messung in Codeklasse CC8 unmittelbar ergeben. Dies führt dazu, daß die Code-Kanäle mit den Nummern 19, 51, 83 und 115, die in Codeklasse CC7 vorhanden sind, aufgrund der orthogonalen Transmit Diversity jeweils einmal für Antenne Ant1 dargestellt sind und einmal für Antenne Ant2 dargestellt sind. Für Antenne Ant2 ist zur besseren Verständlichkeit zusätzlich die Code-Kanal-Nummer, wie sie in Codeklasse CC8 der Fig. 1 dargestellt ist, aufgetragen.

Wie bereits zu Fig. 1 ausgeführt wurde, müßte eine zuordnungsrichtige Darstellung der Antenne Ant1 in Codeklasse CC7 diejenigen Code-Kanäle umfassen, welche aus dem Code-Kanal 19 der Codeklasse CC6 entsprechend dem Code-Ast erzeugt werden. In der oberen Hälfte der Fig. 2 sind diese Code-Kanäle durch die nicht ausgefüllten Balken dargestellt.

Um nun eine antennenrichtige Zuordnung der Code-Kanäle zu erzwingen, werden die jeweils zur Antenne Ant1 gehörenden Code-Kanäle, wie dies durch die Pfeile in Fig. 2 dargestellt ist, erfindungsgemäß tatsächlich der Antenne Ant1 zugeordnet. Die in der oberen Hälfte der Fig. 2 grau dargestellten Code-Kanäle, die tatsächlich der Antenne Ant2 zuzuordnen sind, werden erfindungsgemäß dementsprechend in der unteren Hälfte rechts bei der Antenne Ant2 korrekt dargestellt.

Damit bei der Durchführung der korrekten Zuordnungen keine Leistungswerte der Code-Kanäle überschrieben werden, wird vor Durchführung der Abbildung der einzelnen Code-Kanäle zu ihrer jeweils tatsächlich aktiven Antenne, ein Abbild des Meßergebnisses erzeugt. Damit bleiben sämtliche Leistungen der Code-Kanäle mit ihrem richtigen Wert erhalten.

Von besonderem Vorteil ist die Darstellung bezüglich der tatsächlichen aktiven Antenne eines aktiven Kanals dann, wenn nicht über beide Antennen gesendet wird, sondern lediglich eine der beiden Antennen aktiv ist. Wie sich aus der oberen Hälfte der Darstellung in Fig. 2 unmittelbar erkennen läßt, würden ohne die Durchführung der korrekten Zuordnung sowohl die Antenne Ant1 als auch die Antenne Ant2 Kanäle mit Leistung aufweisen. Nach Durchführung der Code-Kanal-Vertauschung, ist für eine tatsächlich aktive Antenne Ant1 in der unteren Hälfte nur Leistung für Code-Kanäle angezeigt, die tatsächlich der Antenne Ant1 zugeordnet sind, wohingegen für die grau dargestellten Code-Kanäle der Antenne Ant2 keine Leistung angezeigt würde.

In Fig. 3 ist ein Blockschaltbild dargestellt, das einen erfindungsgemäßen Signalanalysator 1 zeigt, mit dessen Hilfe beispielsweise das Signal einer Basisstation 2 analysiert werden soll. Der Signalanalysator 1 umfaßt eine Auswerteeinrichtung 3 sowie eine Anzeigevorrichtung 4. Ein CDMA-Signal 5 wird über einen Eingangsanschluß 6 dem Signalanalysator 1 zugeführt. Im dargestellten Ausführungsbeispiel wird das CDMA-Signal 5 über einen Umschalter 8, der mit dem Signalanalysator 1 verbunden ist, empfangen. Anstelle der direkten Verbindungsleitung, über die das Signal 5 übermittelt wird, könnte auch eine Antenne an dem Eingangsanschluß 6, welche das von der Basisstation 2 über die Antennen Ant1, Ant2 abgestrahlte CDMA-Signal 5 empfängt, oder ein Kombinierer, welcher das Summensignal von Antenne Ant1 und Antenne Ant2 erzeugt, angeschlossen sein.

Nachdem das CDMA-Signal 5 nur einer der beiden Antennen Ant1 oder Ant2 von dem Signalanalysator 1 empfangen ist, wird in der Auswerteeinrichtung 3 die Leistung für die Code-Kanäle derjenigen Codeklasse ermittelt, welche die nächsthöhere zu der darzustellenden Codeklasse ist, die beispielsweise durch einen Bediener festgelegt wird. Im vorstehend beschriebenen Beispiel wäre das die Codeklasse CC8 für die darzustellende Codeklasse CC7. Anschließend wird in der Auswerteeinrichtung 3 eine Abbildung der gemessenen Leistungen der Code-Kanäle erzeugt, wobei aus dieser Abbildung schließlich die Code-Kanäle, welche der entsprechenden Antenne Ant1 bzw. Antenne Ant2 zuzuordnen sind, ermittelt werden.

Die so ermittelten Leistungen der Code-Kanäle für die Antenne Ant1 bzw. für die Antenne Ant2 werden anschließend über eine Verbindung 9 der Anzeigevorrichtung 4 zugeführt. Auf der Anzeigevorrichtung 4 wird dann vorzugsweise ein Balkendiagramm dargestellt, welches die Leistungen der Code-Kanäle zu der darzustellenden Codeklasse, im vorliegenden Fall der Codeklasse CC7, enthält, wobei die Anzeigevorrichtung 4 vorzugsweise jeweils nur Antenne Ant1 oder Antenne Ant2 darstellt.

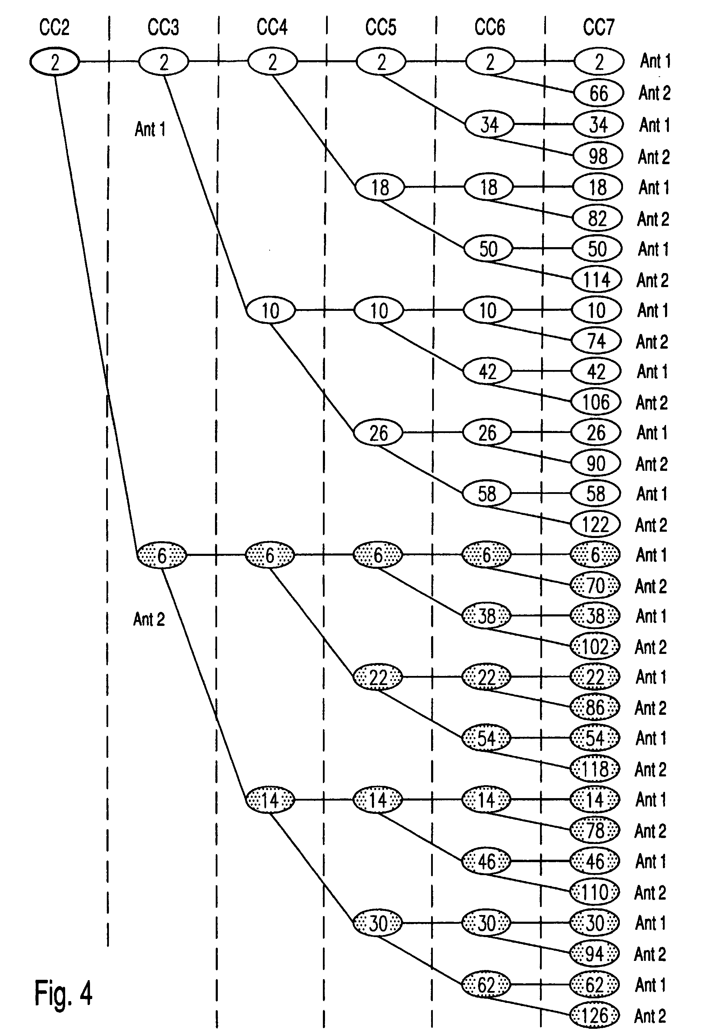

In Fig. 4 ist für einen aktiven Code-Kanal 2 der Codeklasse 2 der sich ergebende Code-Baum dargestellt. Aufgrund der orthogonalen Transmit-Diversity wird der aktive Code-Kanal 2 der Codeklasse CC2 über eine Antenne Ant1 und eine Antenne Ant2 gesendet, wobei die Antenne Ant1 den Code-Kanal 2 der Codeklasse CC3 enthält und die Antenne 2 der Code-Kanal 6 der Codeklasse CC3. Bei einer Darstellung der gemessenen Leistung der einzelnen Code-Kanäle wäre dementsprechend für die Antenne Ant1 jeweils diejenige Leistung der Code-Kanäle anzuzeigen, welche von dem Code-Kanal 2 der Codeklasse CC3 ausgehen. In der Fig. 4 ist dies die gesamte obere Hälfte des dargestellten Code-Baums. Wird eine Darstellung der Codeklasse CC6 gewählt, so wären dementsprechend in einer antennenrichtigen Darstellung bezüglich der Antenne Ant1 die Code-Kanäle 2, 66, 34, usw. bis 122 darzustellen, wie dies der oberen Hälfte der bezüglich Codeklasse CC7 dargestellten Code-Kanäle entspricht.

Zu Darstellung der Leistungen der Code-Kanäle in Codeklasse CC6 muß bei orthogonaler Transmit Diversity, wie dies vorstehend bereits beschrieben wurde, die Leistung der einzelnen Code-Kanäle in der Codeklasse CC7 gemessen werden. Dabei ergibt sich aufgrund der Zuordnung der einzelnen Code-Kanal-Nummern zu Antenne Ant1 bzw. Antenne Ant2, daß nur jede zweite Code-Kanal-Nummer der Codeklasse CC7 der Antenne Ant1 zugeordnet ist.

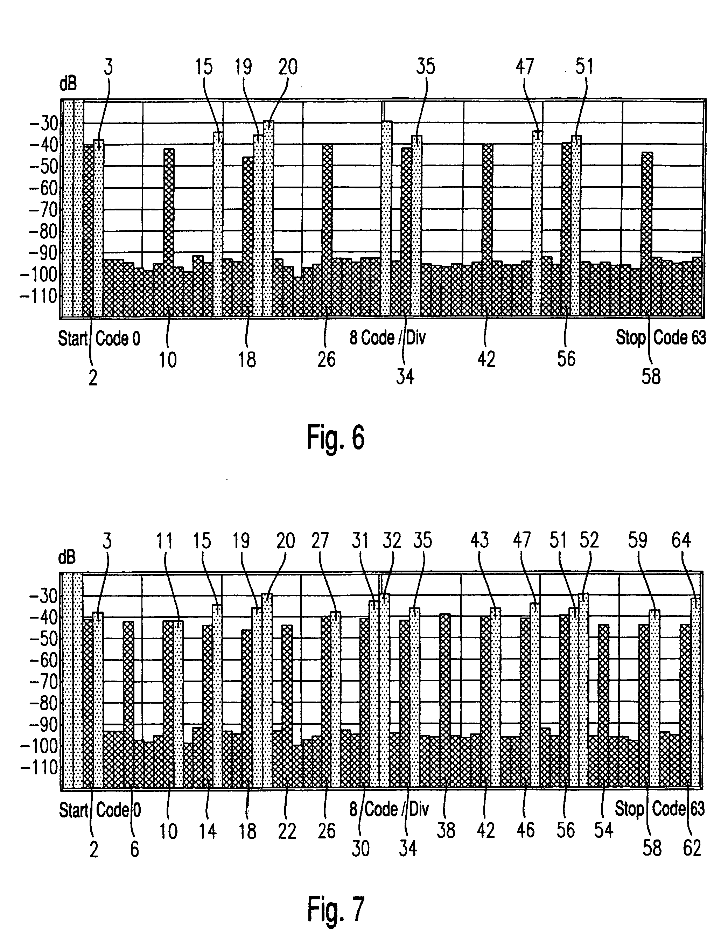

Zur Darstellung der Leistung auf der Anzeigevorrichtung 4 werden die Kanäle erfindungsgemäß so sortiert, daß auf der X-Achse aufsteigende Code-Kanal-Nummern angeordnet sind. In Codeklasse CC7 existieren die Kanal-Nummern 0 bis 127, wobei die Code-Kanal-Nummern 0 bis 63 der Antenne Ant1 zugeordnet sind und die Code-Kanal-Nummer 64 bis 127 der Antenne Ant2. Die sich daraus ergebende Darstellung auf der Anzeigevorrichtung 4 des Signalanalysators 1 ist in Fig. 6 dargestellt, wobei angenommen wird, daß für die Antenne Ant2 jeweils nur Rauschleistung meßbar ist. Ohne Durchführung der erfindungsgemäßen Code-Kanalvertauschung ist daher nur für die Code-Kanäle 2, 10, 18, 26, 34, 42, 50 und 58, welche in der Fig. 6 dunkel dargestellt sind, eine Leistung eines aktive Code-Kanals meßbar.

Aus dem Code-Ast der Antenne Ant1 aus Fig. 4 ergibt sich dagegen, daß Leistungen, die in den Code-Kanälen 66, 74, 82, 90 usw. meßbar sind, ebenfalls der Antenne Ant1 zuzuordnen sind.

Nach Durchführung der erfindungsgemäßen Code-Kanal-Vertauschung ergibt sich das in Fig. 7 dargestellte Bild auf der Anzeigevorrichtung 4, wobei die ursprünglich der Antenne Ant2 zugeordneten Code-Kanäle 66, 74, 82 usw. nun in den Bereich der unteren Code-Kanal-Nummern abgebildet wurden und damit antennenrichtig für die Antenne Ant1 dargestellt werden. In der Fig. 7 sind daher Leistungen für die Code-Kanäle 2, 6, 10, 14, 18, 22, 26 usw. zu erkennen.

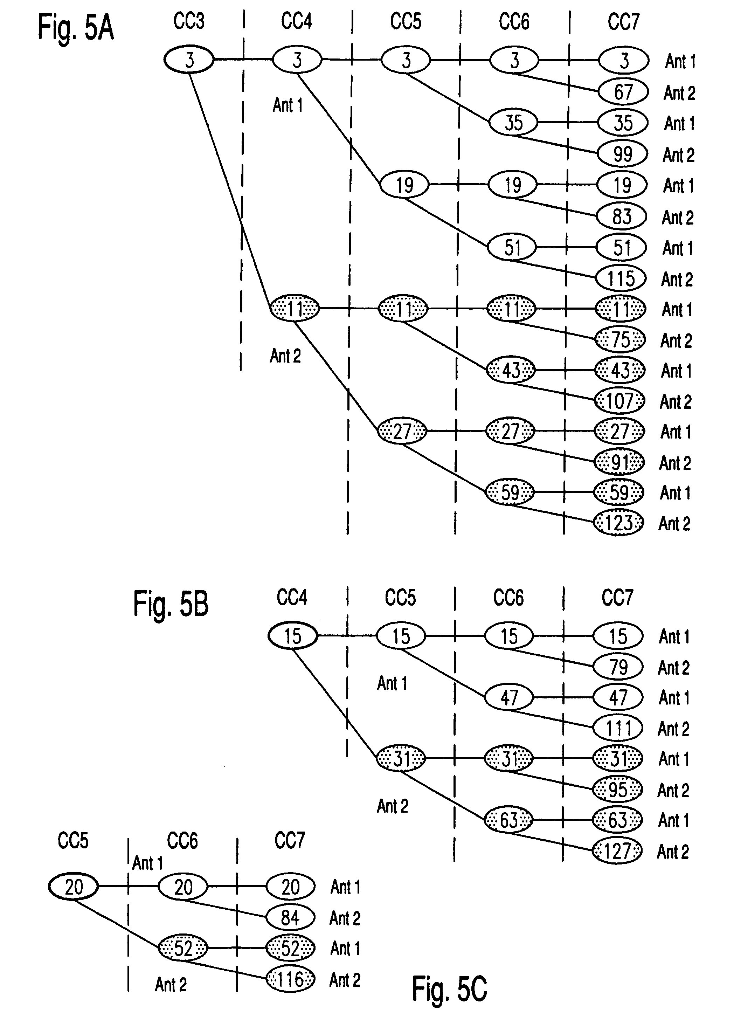

In den Fig. 5A, 5B und 5C sind weitere Ausschnitte aus Code-Bäumen für den aktiven Code-Kanal 3 der Code-Klasse CC3, den aktiven Code-Kanal 15 der Codeklasse CC4 und den aktiven Code-Kanal 20 der Codeklasse CC5 dargestellt. Die jeweils in der Codeklasse CC7 gemessenen Leistungen für Antenne Ant1 sind entsprechend dem vorstehend ausführlich erläuterten Beispiel aus Fig. 4 in Fig. 6 ebenfalls dargestellt. Zur besseren Unterscheidung sind die so dargestellten Code-Kanäle 3, 15, 19, 20 usw. hellgrau dargestellt.

Fig. 7 dagegen zeigt wiederum eine antennenrichtige Darstellung aller bezüglich einer Antenne Ant1 gemessenen Leistungen in den Code-Kanälen. Der verständlicheren Darstellung wegen wurde bei der Darstellung der Fig. 6 davon ausgegangen, daß die Antenne Ant2 jeweils inaktiv ist. In der Praxis jedoch wird meist auch Antenne Ant2 zur Datenübertragung beitragen. Damit in den jeweiligen Code-Kanälen anfallende Leistung der Antenne Ant2 nicht durch die Leistungen der Antenne Ant1 bei der Code-Kanal-Vertauschung überschrieben wird, ist vorher eine entsprechende Speicherung der von Antenne Ant2 stammende Leistungen erforderlich. Eine solche Speicherung kann z. B. durch das Abbild der Leistungen der einzelnen Code-Kanäle vor Durchführung der Code-Vertauschung in einen Speicher erreicht werden.

## Patentansprüche

1. Verfahren zum Anzeigen von Leistungen von Code-Kanälen eines CDMA (Code Division Multiple Access)-Signals, das mit orthogonaler Transmit Diversity (OTD) gesendet wird, wobei das Signal über zumindest eine von mindestens zwei Antennen (Ant1, Ant2) gesendet wird, mit folgenden Verfahrensschritten:
- Empfangen des CDMA-Signals
- Bestimmen einer Codeklasse (CC6, CC7) für die Darstellung der Leistung der einzelnen Code-Kanäle;
- Ermitteln der Leistungen der einzelnen Code-Kanäle (19, 147, 83, ...) in der bezüglich der bestimmten Codeklasse (CC6, CC7) nächsthöheren Codeklasse (CC7, CC8);
- Zuordnen der Leistungen der einzelnen Code-Kanäle (19, 147, 83, ...) auf die jeweilige Antenne (Ant1, Ant2) entsprechend der orthogonalen Transmit Diversity in der bestimmten Codeklasse (CC6, CC7);
- Durchführen einer Code-Kanal-Vertauschung entsprechend der tatsächlichen Zuordnung der Antennen (Ant1, Ant2) bezüglich den Codeklassen (CC2, CC3, CC4, CC5) der tatsächlich aktiven Code-Kanäle (2, 3, 15, 20); und
- Darstellen der Leistungen der vertauschten Code-Kanäle für zumindest eine Antenne (Ant1, Ant2).

2. Verfahren nach Anspruch 1,
**dadurch gekennzeichnet,**
**daß** zur Darstellung der Leistung der tatsächlich aktiven Code-Kanäle (2, 3, 15, 20) die Leistung der zu den jeweiligen aktiven Code-Kanälen (2, 3, 15, 20) gehörenden Code-Äste zusammengefaßt dargestellt wird.

3. Signalanalysator zum Analysieren von CDMA-Signalen mit orthogonaler Transmit Diversity (OTD) für zumindest zwei Antennen (Ant1, Ant2), wobei das CDMA-Signal (5) über mindestens eine von zumindest zwei Antennen (Ant1, Ant2) gesendet wird, mit
einer Auswerteeinrichtung (3), die die Leistungen der einzelnen Code-Kanäle erfaßt und die bezüglich der bestimmten darzustellenden Codeklasse (CC6, CC7) in der nächsthöheren Codeklasse (CC7, CC8) erfaßten, entsprechend der orthogonalen Transmit Diversity auf die jeweiligen Antennen (Ant1, Ant2) verteilten Code-Kanäle jeweils derjenigen Antenne (Ant1; Ant2) zugeordnet, die aufgrund der orthogonalen Transmit Diversity bezüglich des aktiven Code-Kanals tatsächlich aktiv ist,
und einer Anzeigevorrichtung (4), die die Leistung der den Antennen (Ant1; Ant2) durch die Auswerteeinrichtung (3) zugeordneten Code-Kanäle anzeigt.

4. Signalanalysator nach Anspruch 3,
**dadurch gekennzeichnet,**
**daß** die Anzeigevorrichtung (4) die Leistungen der Code-Kanäle für jeweils nur eine tatsächlich aktive Antenne (Ant1; Ant2) darstellt.

5. Signalanalysator nach Anspruch 3 oder 4,
**dadurch gekennzeichnet,**
**daß** die Anzeigevorrichtung (4) die Leistungen von aktiven Code-Kanälen als Summe der Leistungen der einzelnen Code-Äste darstellt.

## Claims

1. Method for displaying powers of code channels of a CDMA (Code Division Multiple Access) signal, which is transmitted with orthogonal transmit diversity (OTD), the signal being transmitted via at least one of at least two antennae (Ant1, Ant2), comprising the following procedural stages:
- reception of the CDMA signal
- determination of a code class (CC6, CC7) for presentation of the power of the individual code channels;
- determination of the powers of the individual code channels (19, 147, 83, ...) in the next highest code class (CC7, CC8) with reference to the determined code class (CC6, CC7);
- assignment of the powers of the individual code channels (19, 147, 83, ...) to the respective antenna (Ant1, Ant2) corresponding to the orthogonal transmit diversity in the determined code class (CC6, CC7);
- implementation of a code channel exchange corresponding to the actual assignment of the antennae (Ant1, Ant2) with reference to the code classes (CC2, CC3, CC4, CC5) of the actually active code channels (2, 3, 15, 20); and
- presentation of the powers of the exchanged code channels for at least one antenna (Ant1, Ant2).

2. Method according to claim 1,
**characterised in that**
in order to present the power of the actually active code channels (2, 3, 15, 20), the power of the code branches associated with each active code channel (2, 3, 15, 20) is presented in an assembled manner.

3. Signal analyser for analysing CDMA signals with orthogonal transmit diversity (OTD) for at least two antennae (Ant1, Ant2), the CDMA signal (5) being transmitted via at least one of at least two antennae (Ant1, Ant2), comprising
an evaluation device (3), which registers the powers of the individual code channels and, with reference to the determined code class (CC6, CC7) to be presented, assigns code channels registered in the next highest code class (CC7, CC8) distributed to the relevant antennae (Ant, Ant2) corresponding to the orthogonal transmit diversity, respectively to that antenna (Ant1; Ant2), which, on the basis of the orthogonal transmit diversity, is actually active with reference to the active code channel,
and a display device (4), which displays the power of the code channels assigned to the antennae (Ant1; Ant2) by the evaluation device (3).

4. Signal analyser according to claim 3,
**characterised in that**
the display device (4) displays the respective powers of the code channels only for one actually active antenna (Ant1; Ant2).

5. Signal analyser according to claim 3 or 4,
**characterised in that**
the display device (4) displays the powers of active code channels as the sum of the powers of the individual code branches.

## Revendications

1. Procédé pour afficher les puissances des canaux de codage d'un signal en mode d'accès multiple par répartition en code, AMRC (Code Division Multiple Access, CDMA), qui est émis en diversité de transmission orthogonale (Orthogonal Transmit Diversity, OTD), moyennant quoi le signal est émis par l'intermédiaire d'au moins une parmi au moins deux antennes (Ant1, Ant2), comportant les étapes de procédé qui suivent, consistant à:
- recevoir le signal AMRC;
- définir une classe de codage (CC6, CC7) pour la représentation de la puissance des canaux de codage individuels;
- déterminer les puissances des canaux de codage individuels (19, 147, 83, ...) dans la classe de codage immédiatement supérieure (CC7, CC8) en relation avec la classe de codage (CC6, CC7) définie;
- associer les puissances des canaux de codage individuels (19, 147, 83, ...) à l'antenne correspondante (Ant1, Ant2) en fonction de la diversité de transmission orthogonale dans la classe de codage (CC6, CC7) définie;
- exécuter une substitution des canaux de codage conformément à l'association effective des antennes (Ant1, Ant2) en relation avec les classes de codage (CC2, CC3, CC4, CC5) des canaux de codage effectivement actifs (2, 3, 15, 20); et
- représenter les puissances des canaux de codage substitués en rapport avec au moins une antenne (Ant1, Ant2).

2. Procédé selon la revendication 1,
**caractérisé en ce que**, en vue de la représentation de la puissance des canaux de codage effectivement actifs (2, 3, 15, 20), la puissance des branches de codage relevant des canaux de codage (2, 3, 15, 20) respectivement actifs est représentée de façon compacte.

3. Analyseur de signaux pour analyser des signaux AMRC (CDMA) en diversité de transmission orthogonale (OTD) en rapport avec au moins deux antennes (Ant1, Ant2), moyennant quoi le signal AMRC (5) est émis par l'intermédiaire d'au moins une parmi au moins deux antennes (Ant1, Ant2), comportant
un dispositif d'évaluation (3), qui détecte les puissances des canaux de codage individuels et associe les canaux de codage détectés dans la classe de codage immédiatement supérieure (CC7, CC8) en relation avec la classe de codage (CC6, CC7) définie à représenter, répartis en fonction de la diversité de transmission orthogonale sur les antennes correspondantes (Ant1, Ant2), respectivement à l'antenne (Ant1, Ant2) qui, compte tenu de la diversité de transmission orthogonale, est effectivement active en relation avec le canal de codage actif,
ainsi qu'un dispositif d'affichage (4), qui affiche la puissance des canaux de codage associés moyennant le dispositif d'évaluation (3) aux antennes (Ant1; Ant2).

4. Analyseur de signaux selon la revendication 3, **caractérisé en ce que** le dispositif d'affichage (4) représente les puissances des canaux de codage en rapport avec respectivement seulement une antenne active (Ant1; Ant2).

5. Analyseur de signaux selon la revendication 3 ou 4, **caractérisé en ce que** le dispositif d'affichage (4) représente les puissances des canaux de codage actifs en tant que somme des puissances des branches de codage individuelles.
